# EUROPEAN PATENT APPLICATION

(11) **EP 4 671 302 A1**
(43) Date of publication of application: **31.12.2025**
(21) Application number: 25184500.4
(22) Date of filing: 23.06.2025
(51) Int. Cl.: C08G 71/02, C08G 71/04, C08L 75/02, C08L 75/04, C08L 75/06, C08L 75/08

(54) **FOAM**

(30) Priority: 28.06.2024 US 202463665254 P
(71) Applicant: Far Eastern New Century Corporation, Taipei (TW)
(72) Inventor: WANG, Hsiao Chan, 330 Taoyuan City (TW); WANG, Cheng-Ting, 330 Taoyuan City (TW)
(74) Representative: D Young & Co LLP

(57) **Abstract**

The present disclosure provides a foam including a condensation type polyurethane resin. The condensation type polyurethane resin includes a plurality of carbamate segments, a plurality of urea group-containing unit segments, and a terminal group bonded to one of the carbamate segments or one of the urea group-containing unit segments. The terminal group has a terminal amine group. A number of hydrogen atoms bonded to nitrogen in a plurality of 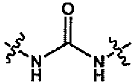 of the urea group-containing unit segments is defined as A₁, a number of hydrogen atoms bonded to nitrogen in 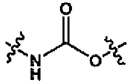 of the carbamate segments and the urea group-containing unit segments is defined as A₂, and A₁/(A₁+A₂) is greater than 0 and less than or equal to 0.4.

## Description

### BACKGROUND

### Field of Invention

The present disclosure relates to a foam.

### Description of Related Art

Polyurethane has good mechanical properties and chemical resistance, so it has been widely used to make foam materials, such as filling materials, shoe components, etc. In the past, the polyurethane was prepared by using isocyanate and polyol as raw materials. For example, US20240336720 discloses a method for preparing the polyurethane using the isocyanate, the polyol, and diamine. However, the isocyanate is not only toxic, but also often requires the use of more toxic phosgene as a raw material in the preparation process of the polyurethane. Therefore, the process of non-isocyanate polyurethane (NIPU) has become a green process that the industry is striving to pursue. The green process of the non-isocyanate polyurethane (NIPU) is divided into two types: polyaddition and polycondensation. The structures of the products of the above two processes are different. The polycondensation process, for example, CN101696271A, CN103865059A, CN116355210A, CN112853531A, and CN104513393B disclose a method for preparing NIPU, in which an organic solvent is used to perform recrystallization purification to remove impurities during the preparation process.

The polyaddition process, for example, US20230183423A1 discloses a method for preparing NIPU by polyaddition process, and the obtained NIPU has an OH functional group on its' side chain (as shown in the following structural diagram):

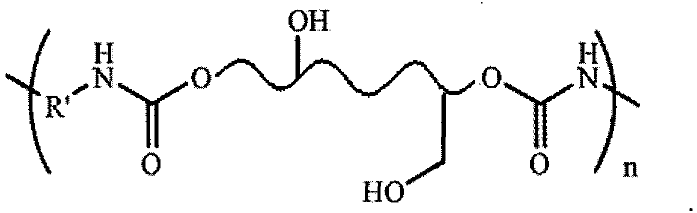

It is noted that due to a linear molecular structure of a polycondensation type NIPU, molecular chain entanglement is insufficient, which results in lower melt viscosity and melt strength. This further leads to the inability of the material to effectively stabilize cells during the foaming process, resulting in coalesced cells, which causes poor quality of the foam. Therefore, there is an urgent need for a polyurethane material that can effectively stabilize cell structure and manufacture a foam with stable quality.

### SUMMARY

The present disclosure provides a foam including a condensation type polyurethane resin. The condensation type polyurethane resin includes a plurality of carbamate segments, a plurality of urea group-containing unit segments, and a terminal group bonded to one of the carbamate segments or one of the urea group-containing unit segments. The terminal group has a terminal amine group. A number of hydrogen atoms bonded to nitrogen in a plurality of 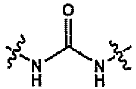 of the urea group-containing unit segments is defined as A₁, a number of hydrogen atoms bonded to nitrogen in 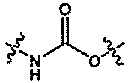 of the carbamate segments and the urea group-containing unit segments is defined as A₂, and A₁/(A₁+A₂) is greater than 0 and less than or equal to 0.4.

It is to be understood that both the foregoing general description and the following detailed description are by examples, and are intended to provide further explanation of the present disclosure as claimed.

### BRIEF DESCRIPTION OF THE DRAWINGS

The present disclosure can be more fully understood by reading the following detailed description of the embodiment, with reference made to the accompanying drawings.
Fig. 1 is a flowchart of a method of preparing a condensation type polyurethane resin, in accordance with various embodiments of the present disclosure.
Fig. 2 is a ¹H NMR spectrum of a polyurethane resin, in accordance with the present disclosure.
Fig. 3 is a flowchart comparing methods of comparative examples and examples, in accordance with the present disclosure.

### DETAILED DESCRIPTION

The present disclosure provides a condensation type polyurethane resin prepared by a polycondensation process. Since the raw material does not contain the isocyanate, the condensation type polyurethane resin prepared by polycondensation process is also called the non-isocyanate polyurethane (NIPU). The condensation type polyurethane resin of the present disclosure has urea structures in the polymer chain. By adjusting the content of the urea structures, the cells can be stabilized during the foaming process, and the density, tensile strength, and elongation at break of a foam material/foam can be balanced to obtain the foam with stable quality.

The condensation type polyurethane resin of the present disclosure includes a plurality of first segments (i.e., carbamate segments or urethane segments), a plurality of second segments (i.e., urea group-containing unit segments), and a terminal group. The carbamate segments have a structure as shown in formula (1): 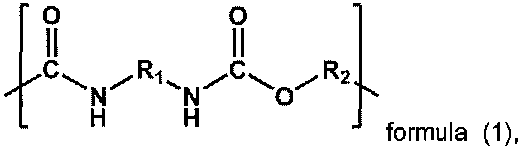 the urea group-containing unit segments have a structure as shown in formula (2): 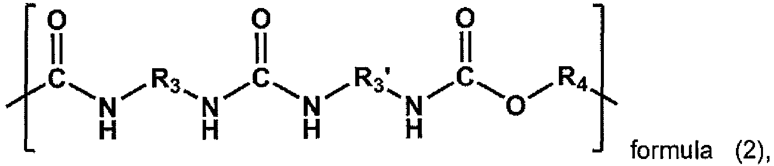 and the terminal group has a structure as shown in formula (3): 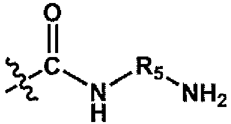 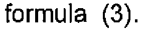 The terminal group is bonded to R₂ of one of the carbamate segments or bonded to R₄ of one of the urea group-containing unit segments. R₁, R₃, R₃', and R₅ independently include a first organyl group of C2-C20, and the first organyl group includes a hydrocarbon group or a group containing carbon, hydrogen, and oxygen. In some embodiments, R₁, R₃, R₃', and R₅ independently include a C2-C20 aliphatic group (such as a linear alkyl group, a branched alkyl group, an alkenyl group, or an alkynyl group), a C3-C20 alicyclic group, or a C6-C20 aryl group. The C2-C20 aliphatic group may be C2, C4, C5, C6, C8, C10, C12, C14, C16, C18, or C20 aliphatic group. For example, 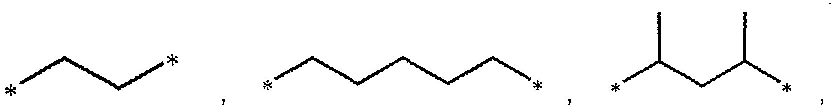 or 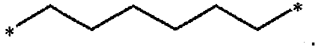 The C3-C20 alicyclic group may be C3, C4, C5, C6, C7, C8, C10, C12, C14, C16, C18, or C20 alicyclic group. For example, 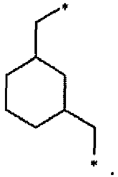 The C6-C20 aryl group may be C6, C8, C10, C12, C14, C16, C18, or C20 aryl group. For example, 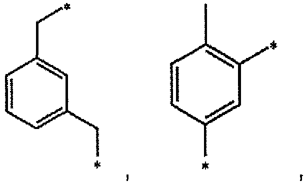 or

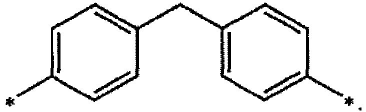

The carbamate segments have the same or different R₂. The urea group-containing unit segments have the same or different R₄. R₂ and R₄ independently include a second organyl group of C2-C20, and the second organyl group includes a hydrocarbon group or a group containing carbon, hydrogen, and oxygen. In some embodiments, R₂ and R₄ independently include 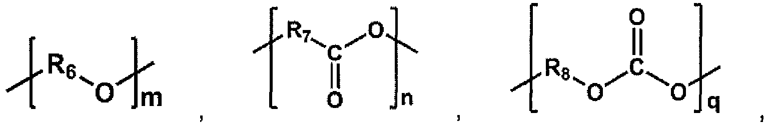 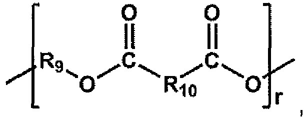 or combinations thereof. R₆, R₇, R₈, R₉, and R₁₀ independently include a third organyl group of C2-C20, and the third organyl group includes a hydrocarbon group or a group having carbon, hydrogen, and oxygen. m, n, q, and r are independently 1-250. R₆, R₇, R₈, R₉, and R₁₀ independently include a C2-C20 aliphatic group (such as C2, C4, C5, C6, C8, C10, C12, C14, C15, C16, C18, or C20), a C3-C20 alicyclic group (such as C3, C4, C5, C6, C7, C8, C10, C12, C14, C16, C18, or C20), or a C6-C20 aryl group (such as C6, C8, C10, C12, C14, C16, C18, or C20). In some embodiments, the C2-C20 aliphatic group includes a C2-C20 linear alkyl group, a C2-C20 branched alkyl group, a C2-C20 alkenyl group, or a C2-C20 alkynyl group. For example, R₆ includes 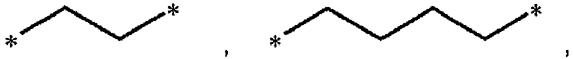 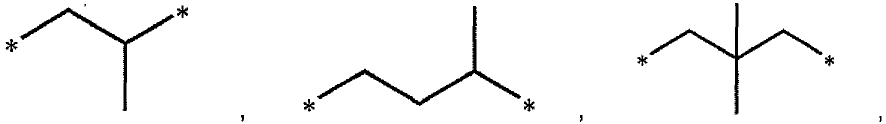 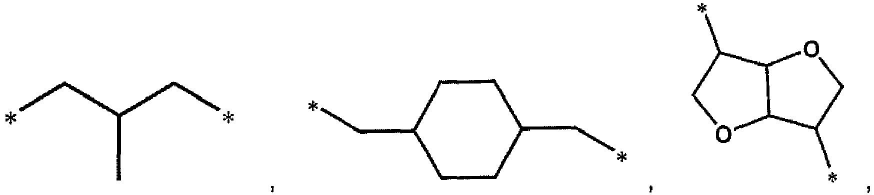 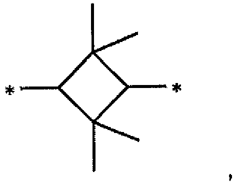 or combinations thereof. R₇ includes 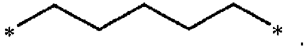 R₈ includes 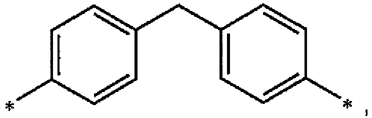 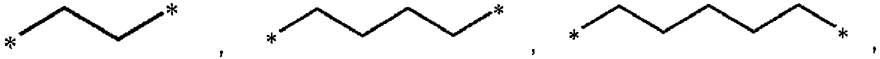 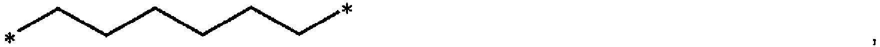 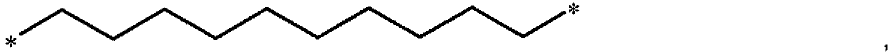 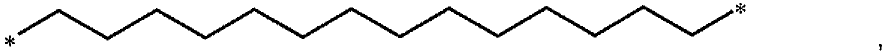 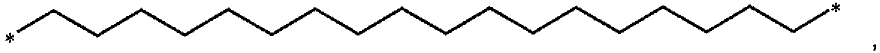 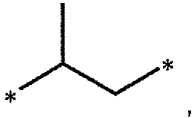 or combinations thereof. R₁₀ includes 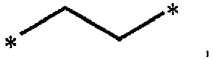 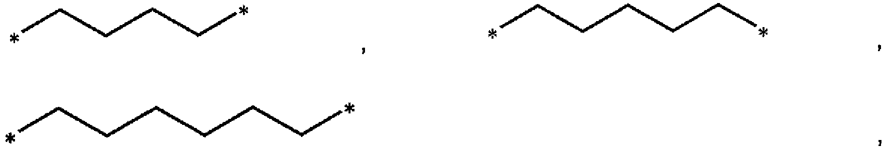 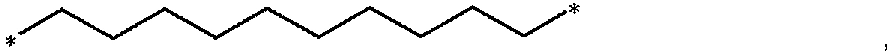 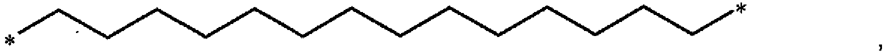 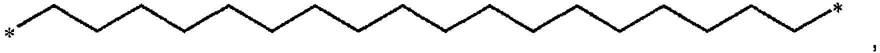 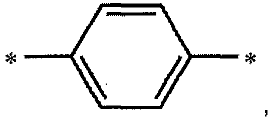 or combinations thereof. The first and the second organyl group may be the same or different. The following are specific examples of R₂ and R₄. R₂ and R₄ independently include 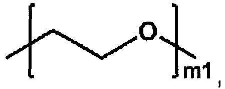 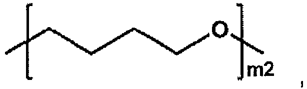 a copolymer of 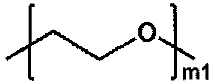 and 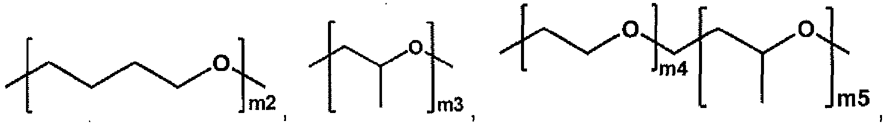 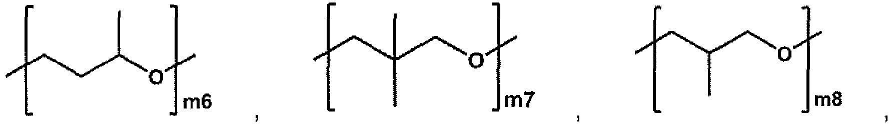 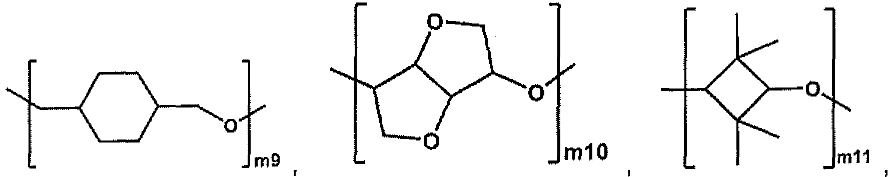 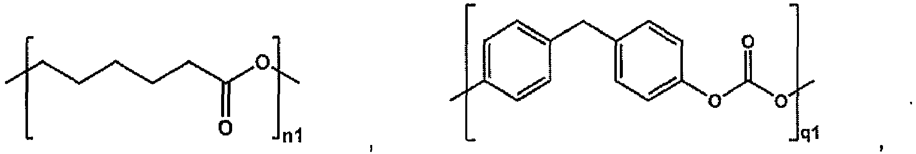 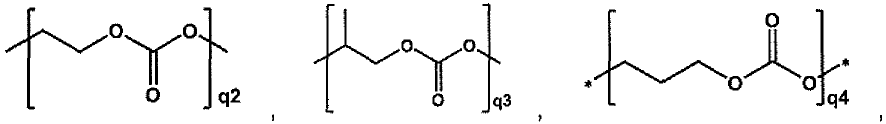 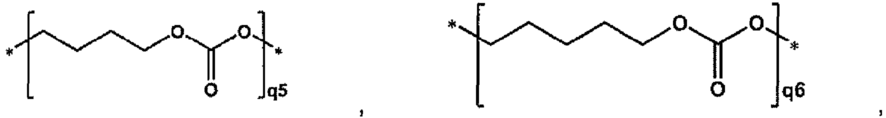 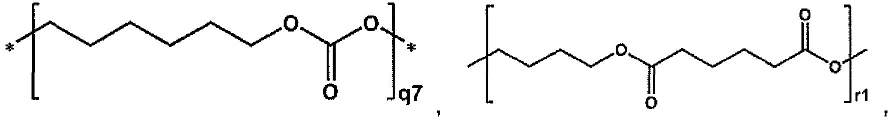 or 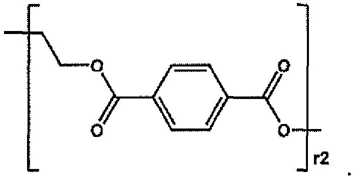 m1-m11, n1, q1-q7, and r1-r2 are independently 1-250, such as 1, 5, 10, 20, 50, 100, 125, 150, 175, 200, 225, or 250.

A number of hydrogen atoms bonded to nitrogen in a plurality of urea group units 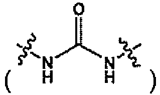 of the urea group-containing unit segments is defined as A₁, and a number of hydrogen atoms bonded to nitrogen in a plurality of carbamate units 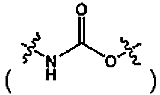 of the carbamate segments and the urea group-containing unit segments is defined as A₂. A₁/(A₃+A₂) is greater than 0 and less than or equal to 0.4, such as 0.05, 0.1, 0.15, 0.2, 0.25, 0.3, 0.35, or 0.4. In some embodiments, A₁/(A₁+A₂) is 0.1-0.3, such as 0.1, 0.15, 0.2, 0.25, or 0.3. In some embodiments, A₁/(A₁+A₂) is 0.2-0.3, such as 0.2, 0.25, or 0.3. The urea group units 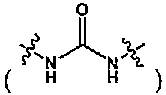 form -N-H... O=C- intermolecular hydrogen bonding forces (such as 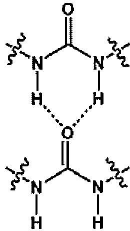 ). Therefore, contents of the urea group units (i.e., A₁/(A₁+A₂)) affect the properties of a polyurethane resin material and also affect the foam structure during and after the foaming process of the polyurethane resin material. When the contents of the urea group units (A₁/(A₃+A₂)) are within the aforementioned range, the polyurethane resin material can stabilize cells during the foaming process to produce the foam taken account of density (0.14 g/cm³-0.35 g/cm³), the tensile strength (greater than 20 kgf/cm²), and the elongation at break (greater than 100 %). The condensation type polyurethane resin has an amine value not less than 10 meq/kg, such as 10, 12, 14, 16, 18, 20, 22, 24, 26, 28, or 30.

In some embodiments, the polyurethane resin of the present disclosure is mixed with an additive, for example, the additive is a chain-extending agent, a crosslinking agent, a catalyst, a processing aid, a stabilizer, a compatibilizer, pigment, a surface-active substance, a foam stabilizer, a cell regulator, a release agent, a filler, a dye, a hydrolysis stabilizer, an odor-absorbing substance, or an antibacterial substance. The polyurethane resin of the present disclosure may mix with the additive by a conventional method/device, such as a mixer, a kneader, an extruder (for example, a single-screw extruder or a twin-screw extruder), or dry blend.

The present disclosure provides a foam including a condensation type polyurethane resin. The condensation type polyurethane resin includes a plurality of carbamate (or urethane) segments, a plurality of urea group-containing unit segments, and a terminal group. The terminal group is bonded to one of the carbamate segments or one of the urea group-containing unit segments. In some embodiments, the carbamate segments, the urea group-containing unit segments, and the terminal group each have the structure as shown in formula (1), the structure as shown in formula (2), and the structure as shown in formula (3), in which the structure as shown in formula (1), the structure as shown in formula (2), and the structure as shown in formula (3) have described previously, so it will not be discussed in detail. The terminal group has a terminal amine (-NH₂) group. A number of hydrogen atoms bonded to nitrogen in a plurality of urea group units ( 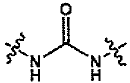 ) of the urea group-containing unit segments is defined as A₁, and a number of hydrogen atoms bonded to nitrogen in a plurality of carbamate units ( 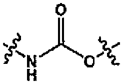 ) of the carbamate segments and the urea group-containing unit segments is defined as A₂. A₁/(A₁+A₂) is greater than 0 and less than or equal to 0.4. Refer to the aforementioned for the embodiments of A₁/(A₁+A₂). Therefore, it will not be discussed in detail. Refer to the aforementioned for the polyurethane resin, the structure thereof, the amine value thereof, and the effects thereof. It will not be discussed in detail.

In some embodiments, a density of the foam is 0.14 g/cm³ to 0.35 g/cm³, such as 0.14, 0.15, 0.16, 0.18, 0.2, 0.22, 0.24, 0.26, 0.28, 0.3, 032, 0.34, or 0.35 g/cm³. In some embodiments, a strain hardening factor (SHF)/strain hardening index (SHI) of the foam is 1-8, such as 1, 2, 4, 6, or 8. In some embodiments, the tensile strength of the foam is greater than 20 kgf/cm², preferably between 20 kgf/cm² and 31 kgf/cm², such as 20, 21, 23, 25, 27, 29, 30, or 31 kgf/cm². In some embodiments, the elongation at break of the foam is greater than 100 %, preferably between 100 % and 280 %, such as 100, 120, 140, 160, 180, 200, 220, 240, 260, or 280 %.

Although a series of operations or steps are used below to describe the method disclosed herein, an order of these operations or steps should not be construed as a limitation to the present disclosure. For example, some operations or steps may be performed in a different order, and/or other steps may be performed at the same time. In addition, it is not necessary to perform all of the operations, steps, and/or features shown to achieve the embodiments of the present disclosure. In addition, each operation or step described herein may contain several sub-steps or actions.

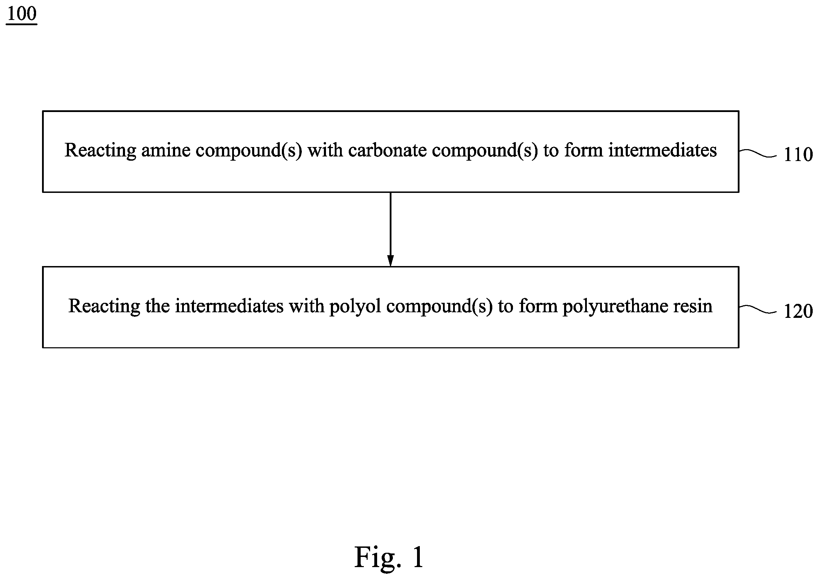

Fig. 1 is a flowchart of a method 100 of preparing the condensation type polyurethane resin, in accordance with various embodiments of the present disclosure. The method 100 includes steps 110 and 120. As shown in Fig. 1, in step 110, amine compound(s) react(s) with carbonate compound(s) to form intermediates. In some embodiments, the amine compound(s) include(s) polyamine(s), in which the polyamine(s) include(s) diamine/divalent amine, triamine, or tetraamine. For example, the diamine/divalent amine include(s) C5-C20 aliphatic diamine, C3-C20 alicyclic diamine, C6-C20 aromatic diamine, or combinations thereof. The following are specific examples of the diamine/divalent amine: 1,5-pentanediamine, 2,4-pentanediamine, hexamethylenediamine (HMDA), 1,3-bis(aminomethyl)cyclohexane (1,3-BAC), m-xylylenediamine (MXDA), or combinations thereof. The following is specific example of the triamine: diethylenetriamine.

In some embodiments, the carbonate compound(s) include(s) cyclic carbonate, linear carbonate, branched carbonate, or carbonate derivative. In some embodiments, the carbonate compound(s) include(s) dialkyl carbonate having structures as shown in formula (4) or formula (5): 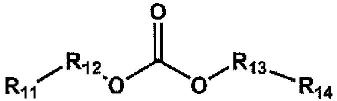 formula (4), and 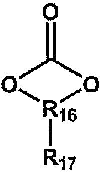 formula (5). R₁₁, R₁₄, and R₁₇ independently include *-H, *-OH, *-NH₂, *-COOH, *-SH, or *-CH₃ (* represents a position bonded to the group), and R₁₂, R₁₃, and R₁₆ independently include a C1-C20 hydrocarbon group. The following are the examples of the carbonate compound(s): ethylene carbonate (EC), propylene carbonate (PC), dimethyl carbonate (DMC), diphenyl carbonate (DPC), or the carbonate obtained by reacting carbon dioxide, an epoxy compound, and a glycol.

Step 110 is a carbamation reaction. Specifically, the terminal amine group (NH₂) of the amine compound(s) react(s) with the carbonate compound(s) to form the intermediates (P1 and P2) having the carbamate 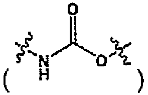 structures or the intermediate (P3) having the urea group 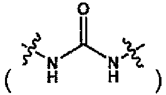 structures. A chemical reaction is as follows (the amine compound(s) is/are exemplified by the aforementioned diamine/divalent amine (R₁₈ is a C5-C20 aliphatic diamine, a C3-C20 alicyclic diamine, or a C6-C20 aromatic diamine), and the carbonate compound(s) is/are exemplified by the aforementioned structure as shown in formula (5)): 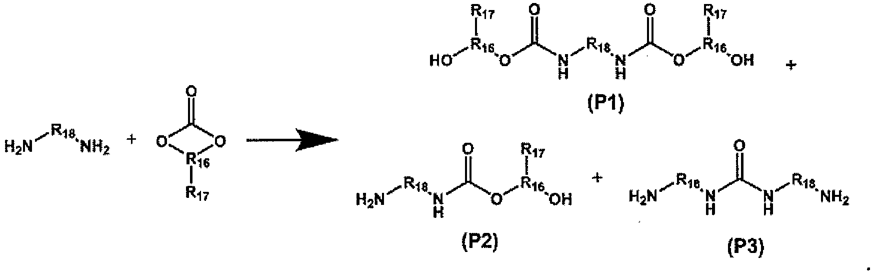 In some embodiments, a molar ratio of the amine compound(s) to the carbonate compound(s) is between 1:1 and 1:3. In some embodiments, a weight ratio of the amine compound(s) to the carbonate compound(s) is between 1:0.5 and 1:3. In some embodiments, a reaction temperature of step 110 is between 30 °C and 100 °C, preferably between 50 °C and 80 °C. In some embodiments, an amine value of the intermediates is less than 100 mg KOH/g, such as 1, 1.1, 1.2, 1.3, 1.4, 1.5, 1.6, 1.8, 2, 10, 20, 50, 70, or 90 mg KOH/g.

As shown in Fig. 1, in step 120, the intermediates react with polyol compound(s) to form the polyurethane resin. In some embodiments, the number average molecular weight (Mn) of the polyol compound(s) is between 60 and 10000, such as 60, 80, 100, 200, 500, 1000, 1400, 1800, 2000, 5000, 7000, 9000, or 10000. In some embodiments, the polyol compound(s) include(s) diol. The diol has structure(s) as shown in formula (6): HO-R₁₉-OH, in which R₁₉ includes ether group, ester group, carbonate group, or alkylene group. The examples of the polyol compound(s) are as follows: polyethylene glycol (PEG), polytetramethylene ether glycol (PTMEG), polypropylene glycol (PPG), a copolymer of PPG and PEG (PPG-co-PEG), polybutylene adipate (PBA) polyol, polycaprolactone (PCL) polyol, an oligomer of bis-2-hydroxyethyl terephthalate (BHET), C2-C20 polycarbonate diol (PCDL), polyethylene carbonate (PEC) polyol, polypropylene carbonate (PPC) polyol, ethylene glycol, propylene glycol, butylene glycol, neopentyl glycol, 2-methyl-1,3-propanediol, diethylene glycol, 1,4-cyclohexanedimethanol, isosorbide (ISOS) glycol, tetramethylcyclobutanediol (TMCD), or bis-2-hydroxyethyl terephthalate (BHET).

Step 120 is a polycondensation reaction. Specifically, oxygen atom(s) of the polyol compound(s) act(s) as nucleophilic group to attack carbon atoms of the carbamate units of the intermediates, such that the oxygen atom(s) of the polyol compound(s) is/are bonded to the carbon atoms of the carbamate units of the intermediates to form the polyurethane resin. The carbonyl groups of the carbamate units of the intermediates break the bond with oxygen atom(s) next to the carbonyl group(s), and the oxygen atom(s) is/are bonded to terminal hydrogen atom(s) of the polyol compound(s) to form leaving group(s) (i.e., a condensation reaction) during the formation of the polyurethane resin. The chemical reaction is as follows (the intermediates are exemplified by P1, and the polyol compound(s) is/are exemplified by the structure as shown in formula (6)):

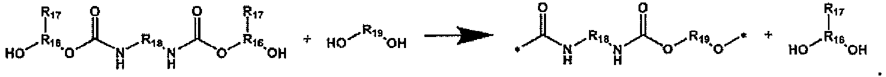

In some embodiments, a weight ratio of the polyol compound(s) to the intermediate(s) is between 65:35 and 45:55, such as 65:35, 60:40, 55:45, 50:50, or 45:55. In some embodiments, a reaction temperature of step 120 is between 120 °C and 180 °C. In some embodiments, a reaction time of step 120 is between 0.5 hours and 2 hours. In some embodiments, a reaction pressure of step 120 is less than 50 torr.

In some embodiments, step 120 further includes adding a catalyst in the reaction. In some embodiments, the catalyst accounts for 0.002 wt% to 1 wt% of all reactants (the amine compound(s), the carbonate compound(s), and the polyol compound(s)). In some embodiments, the catalyst includes a metal hydroxide, a metal oxide, a metal carbonate, a metal bicarbonate, a metal halide, a metal acetate, a tin organic compound, a titanium organic compound, an organic acid, or combinations thereof. The examples of the catalyst are as follows: stannous chloride, tin oxide, zinc oxide, zinc acetate, zinc chloride, aluminum chloride, aluminum carboxylate, titanium complex, tetrabutyl titanate, or tetraisopropyl titanate. Refer to the aforementioned for the structures, the embodiments, and the effects of the polyurethane resin formed after step 120.

After the polyurethane resin is completely prepared, it can be further made into foam. The foam can be prepared by, for example, an impregnation foaming method, a supercritical fluid injection foaming method, or a chemical foaming method.

The features of the present disclosure will be described in more detail below with reference to experimental examples. Although the following examples are described, the materials, the amounts and ratios thereof, the processing details, and the processing procedures, and the like which is used may be appropriately changed without exceeding from the scope of the present disclosure. Therefore, the present disclosure should not be interpreted restrictively by the experimental examples described below.

The following are the chemicals and the information thereof used in the following experiments.
HMDA: Hexamethylenediamine, purchased from Huafon Chemical Co., Ltd
EC: Ethylene carbonate, purchased from Oriental Union Chemical Corporation
PTMEG 1000: poly(tetramethylene ether) glycol, Mn=1000, purchased from Formosa Asahi Spandex Co., Ltd.
PTMEG 1400: poly(tetramethylene ether) glycol, Mn=1400, purchased from Dairen Chemical Corporation
PHC diol 1000: poly(hexamethylene carbonate) diol, Mn=1000, purchased from Tosoh Corporation, the model number is Nippollan 981
BDO: 1,4-butandiol, purchased from Echo Chemical Co., Ltd
BHET: Bis(2-hydroxyethyl) terephthalate, purchased from Sigma-Aldrich
SnCl₂ • H₂O: Stannous Chloride dihydrate, purchased from Echo Chemical Co., Ltd

Experimental example [condensation type polyurethane resin, preparation thereof, and measurements of physical properties thereof]

In examples 1-15, the amine compound, the carbonate compound, and the polyol compound were placed in a stainless steel reactor and reacted at 75 °C, and The amine value of the intermediates was measured and shown in table 1.. Next, 0.185 wt% (0.185 wt% of the total weight of all reactants) SnCl₂ • H₂O was added into the stainless steel reactor and reacted at 180 °C and 10 torr for 1 hour. Then, the pressure was reduced to 3 torr, and until viscosity of the product (the polyurethane resin) no longer increased (i.e., the product (the polyurethane resin) has 8 kgf torque value at 50 rpm), thereby obtaining polyurethane resins E1-E15. Refer to table 1 for types and weight ratios of the amine compound, the carbonate compound, and the polyol compound(s), the amine values of the intermediates, and amine values of the polyurethane resins. The test standard of the amine value is ASTM D2074.

**Table 1**

| Examples/ polyurethane resins | (1)Amine compound | The weight ratio of the amine compound, the carbonate compound, and the polyol compound(s) | Amine values of interm ediates (mg KOH/g ) | Amine values of polyurethane resins (meq/kg) target range of the amine values: not less than 10 meq/kg |
|---|---|---|---|---|
| | (2)Carbonate compound | | | |
| | (3)Polyol compound(s) | | | |
| 1/E1 | (1)HMDA | HMDA:EC:PTMEG 1000:PHC diol 1000= 17.2:27.6:54.7:0 .5 | 1.8 | 25 |
| | (2)EC | | | |
| | (3)PTMEG 1000, PHC diol 1000 | | | |
| 2/E2 | (1)HMDA | HMDA:EC:PTMEG 1400= 14.8:23.7:61.5 | 1.6 | 19 |
| | (2)EC | | | |
| | (3)PTMEG 1400 | | | |
| 3/E3 | (1)HMDA | HMDA:EC:PTMEG 1000:PHC diol 1000= 18.7:30.1:50.7: 0.5 | 1.8 | 18 |
| | (2)EC | | | |
| | (3)PTMEG 1000, PHC diol 1000 | | | |
| 4/E4 | (1)HMDA | HMDA:EC:PTMEG 1000:PHC diol 1000= 18.7:30.1:50.7: 0.5 | 1.9 | 23 |
| | (2)EC | | | |
| | (3)PTMEG 1000, PHC diol 1000 | | | |
| 5/E5 | (1)HMDA | HMDA:EC: PTMEG 1400: BDO=19:30.5: 47.7:3.2 | 2.4 | 27 |
| | (2)EC | | | |
| | (3)PTMEG 1400, BDO | | | |
| 6/E6 | (1)HMDA | HMDA:EC:PTMEG 1000:PHC diol 1000= 17.2:27.6:54.7: 0.5 | 2.2 | 30 |
| | (2)EC | | | |
| | (3)PTMEG 1000, PHC diol 1000 | | | |
| 7/E7 | (1)HMDA | HMDA:EC:PTMEG 1000:PHC diol 1000= 17.2:27.6:54.7: 0.5 | 1.0 | 11 |
| | (2)EC | | | |
| | (3)PTMEG 1000, PHC diol 1000 | | | |
| 8/E8 | (1)HMDA | HMDA:EC:PTMEG 1000:PHC diol 1000= 18.7:30.1:50.7: 0.5 | 1.0 | 14 |
| | (2)EC | | | |
| | (3)PTMEG 1000, PHC diol 1000 | | | |
| 9/E9 | (1)HMDA | HMDA:EC:PTMEG 1000:PHC diol 1000= 17.2:27.6:54.7: 0.5 | 1.1 | 21 |
| | (2)EC | | | |
| | (3)PTMEG 1000, PHC diol 1000 | | | |
| 10/E10 | (1)HMDA | HMDA:EC:PTMEG 1000:PHC diol 1000= 17.2:27.6:54.7: 0.5 | 1.1 | 21 |
| | (2)EC | | | |
| | (3)PTMEG 1000, PHC diol 1000 | | | |
| 11/E11 | (1)HMDA | HMDA:EC: PTMEG 1400: BHET=19:30.5: 47.7:3.1 | 1.3 | 19 |
| | (2)EC | | | |
| | (3)PTMEG 1400, BHET | | | |
| 12/E12 | (1)HMDA | HMDA:EC:PTMEG 1000:PHC diol 1000= 17.2:27.6:54.7: 0.5 | 1.8 | 18 |
| | (2)EC | | | |
| | (3)PTMEG 1000, PHC diol 1000 | | | |
| 13/E13 | (1)HMDA | HMDA:EC: PTMEG 1400: BDO=19:30.5: 47.7:3.2 | 2.4 | 27 |
| | (2)EC | | | |
| | (3)PTMEG 1400, BDO | | | |
| 14/E14 | (1)HMDA | HMDA:EC: PTMEG 1400= 14.8:23.7:61.5 | 2.3 | 18 |
| | (2)EC | | | |
| | (3)PTMEG 1400 | | | |
| 15/E15 | (1)HMDA | HMDA:EC:PTMEG 1000:PHC diol 1000= 17.2:27.6:54.7: 0.5 | 3.7 | 25 |
| | (2)EC | | | |
| | (3)PTMEG 1000, PHC diol 1000 | | | |

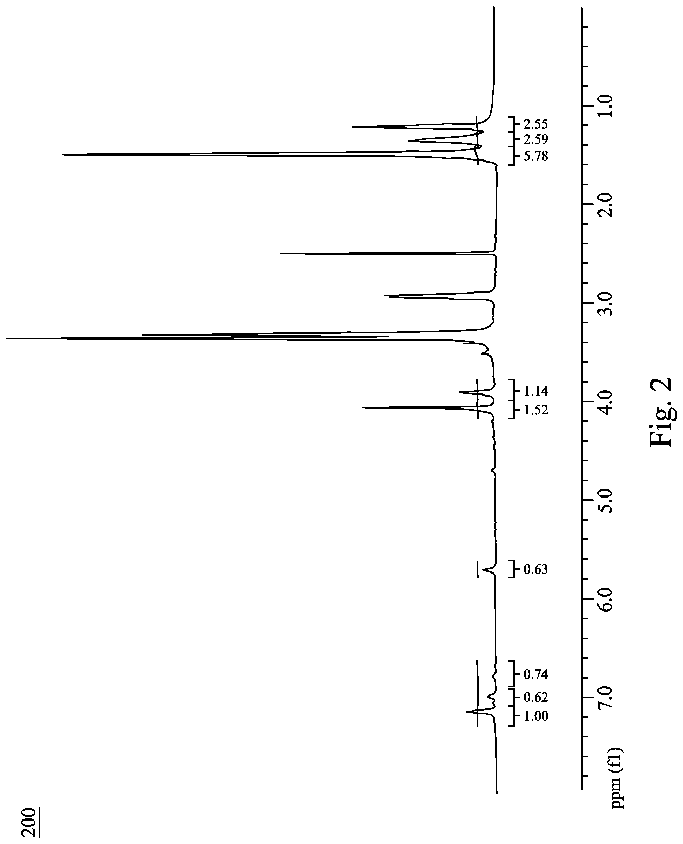

Table 2 lists the content of the urea group unit (A₁/(A₁+A₂)) and the strain hardening index (SHI) of the polyurethane resins E1-E15. A₁ and A₂ are obtained by the following method: an integral area (A₁) with a chemical shift (δ) at 5.6ppm-5.8ppm and an integral area (A₂) with a chemical shift at 6.7ppm-7.3ppm are calculated by using a nuclear magnetic resonance (NMR) hydrogen spectrum (1H NMR (DMSO-d₆)) of the polyurethane resins. Fig. 2 is the ¹H nuclear magnetic resonance spectrum 200 of the polyurethane resin E3, in accordance with the present disclosure. Taking the polyurethane resin E3 as an example, A₁=0.63, A₂=1+0.62+0.74=2.36, and A₁/(A₁+A₂)=0.211, as shown in Fig. 2. SHI was measured by using a rheometer (ARES, manufactured by TA Institutes) with a extensional viscosity accessory (ARES-EVF) at 150 °C and a extensionalrate of 1s⁻¹..

**Table 2**

| Polyurethane resin | Content of the urea group unit (A₁/(A₁+A₂)) | SHI |
|---|---|---|
| | target range of A₁/(A₁+A₂): >0 and ≤0.4 | |
| E1 | 0.205 | 2.2 |
| E2 | 0.207 | 1.4 |
| E3 | 0.211 | 2.7 |
| E4 | 0.234 | 2.3 |
| E5 | 0.270 | 7.1 |
| E6 | 0.287 | 2.5 |
| E7 | 0.097 | 2.3 |
| E8 | 0.113 | 1.9 |
| E9 | 0.163 | 1.6 |
| E10 | 0.163 | 1.6 |
| E11 | 0.187 | 1.9 |
| E12 | 0.211 | 2.7 |
| E13 | 0.270 | 7.1 |
| E14 | 0.321 | 3.8 |
| E15 | 0.382 | 2.7 |

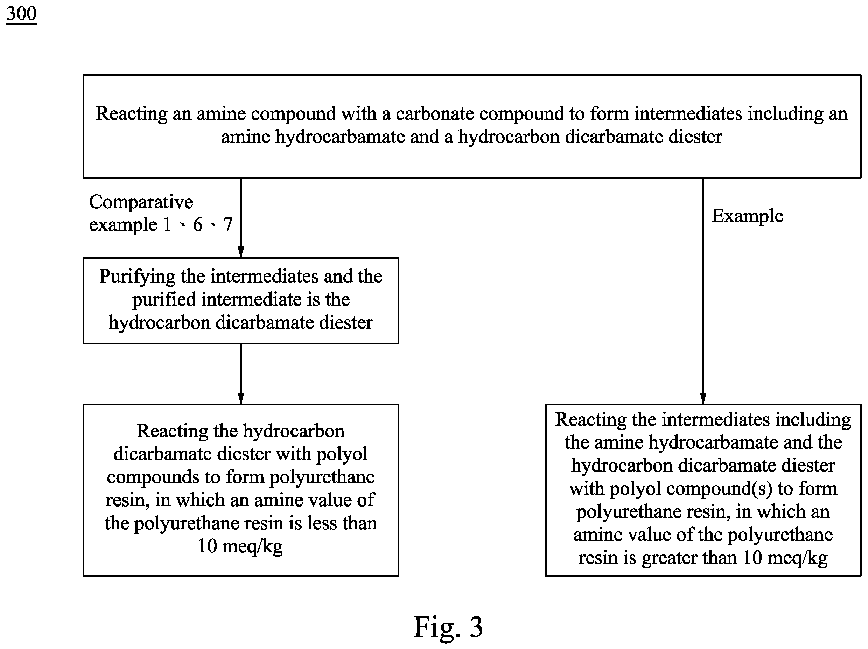

Fig. 3 is a flowchart 300 comparing methods of comparative examples 1, 6, 7, and examples, in accordance with the present disclosure. In the comparative examples 1, 6, and 7, an amine compound and a carbonate compound were placed in a stainless steel reactor and reacted at 75 °C for 6 hours to obtain a carbamate mixture. Next, the carbamate mixture was washed and filtered to remove the liquid and was recrystallized to obtain a bis(2-hydroxyethyl) hexane-1,6-diyldicarbamate intermediate. Subsequently, the intermediate was mixed with a polyol compound, and 0.185wt% (i.e., 0.185wt% of the total weight of all reactants) of SnCl₂ • H₂O was added. The reaction was carried out at 180 °C and 10 torr for 1 hour. Subsequently, the pressure is reduced to 3 torr. Polyurethane resins B1, B6, and B7 were obtained until the viscosity of the product (the polyurethane resin) was no longer increased (i.e., the product (the polyurethane resin) has 8 kgf torque value at 50 rpm) Specifically, referring to Fig. 3, since the intermediate of comparative examples 1, 6, and 7 are purified by recrystallization, the purified intermediate only has hydrocarbon dicarbamate diester. On the other hand, refer to Fig.3, the intermediate of the examples in the present disclosure is directly polymerized without purification, so the intermediate of the examples in the present case is a carbamate mixture including hydrocarbon dicarbamate diester (i.e., the intermediate P1) and amine hydrocarbamate (i.e., the intermediate P2). It is different from the intermediate of the comparative examples 1, 6, and 7. Therefore, after the intermediate is polymerized with the polyol compound, the number of the terminal amine groups of the polyurethane resin products of the comparative examples 1, 6, and 7 is in a small amount (less than 10 meq/kg), as shown in Fig. 3. The types of amine compound, the carbonate compound, and the polyol compound(s), the molar ratio of the amine compound to the carbonate compound, the weight ratio of the intermediate to the polyol compound(s), the amine value of the intermediate, and the amine value of the polyurethane resin can be found in table 3. The test standard of the amine value is ASTM D2074.

In comparative examples 2-5, polyurethane resins B2-B5 were prepared by using the aforementioned methods of the examples 1-15. The types and the weight ratio of the amine compound, the carbonate compound, and the polyol compound(s), the amine value of UD, and the amine value of the polyurethane resin can be found in table 3. The test standard of the amine value is ASTM D2074.

**Table 3**

| Comparative examples/polyurethane resins | (1)Amine compound | The molar ratio of the amine compound to the carbonate compound, the weight ratio of the intermediate to the polyol compound(s) (B1, B6, B7),the weight ratio of the amine compound, the carbonate compound, and the polyol compound(s) (B2-B5) | Amine values of interm ediates (mg KOH/g) | Amine values of polyurethane resins (meq/kg) |
|---|---|---|---|---|
| | (2)Carbonate compound | | | |
| | (3)Polyol compound(s) | | | |
| 1/B1 | (1)HMDA | HMDA:EC=1:2.1 (molar ratio) | 0.2 | 0.1 |
| | (2)EC | | | |
| | (3)PTMEG 1000, PHC diol 1000 | Intermediate:PTMEG 1000:PHC diol 1000= 44.8:54.7:0.5 (weight ratio) | | |
| 2/B2 | (1)HMDA | HMDA:EC:PTMEG 1000:PHC diol 1000= 17.2:27.6:54.7:0.5 | 4.3 | 26 |
| | (2)EC | | | |
| | (3)PTMEG 1000, PHC diol 1000 | | | |
| 3/B3 | (1)HMDA | HMDA:EC:PTMEG 1000:PHC diol 1000= 18.7:30.1:50.7:0.5 | 4.5 | 28 |
| | (2)EC | | | |
| | (3)PTMEG 1000, PHC diol 1000 | | | |
| 4/B4 | (1)HMDA | HMDA:EC:PTMEG 1400:BHET= 19:30.5:47.7:3.1 | 4.8 | 29 |
| | (2)EC | | | |
| | (3)PTMEG 1400, BHET | | | |
| 5/B5 | (1)HMDA | HMDA:EC:PTMEG 1000:PHC diol 1000= 17.2:27.6:54.7:0.5 | 4.5 | 28 |
| | (2)EC (3)PTMEG 1000, PHC | | | |
| | diol 1000 | | | |
| 6/B6 | (1)HMDA | HMDA:EC=1:2.1 (molar ratio) | 0.2 | 2.6 |
| | (2)EC | | | |
| | (3)PTMEG 1000, PHC diol 1000 | Intermediate:PTMEG 1000:PHC diol 1000= 44.8:54.7:0.5 (weight ratio) | | |
| 7/B7 | (1)HMDA | HMDA:EC=1:2.1 (molar ratio) | 0.7 | 6.9 |
| | (2)EC | | | |
| | (3)PTMEG 1000, PHC diol 1000 | Intermediate:PTMEG 1000:PHC diol 1000= 44.8:54.7:0.5 (weight ratio) | | |

Table 4 lists the content of the urea group unit (A₁/(A₁+A₂)) and the strain hardening index (SHI) of the polyurethane resins B1-B7. The definition of A₁ and A₂, the method for obtaining A₁ and A₂, and the method for measuring SHI can be found in the description of table 2.

**Table 4**

| Polyurethane resins | the content of the urea group unit | SHI |
|---|---|---|
| | A₁/(A₁+A₂) | |
| B1 | 0 | 1.3 |
| B2 | 0.411 | 1.6 |
| B3 | 0.425 | 1.2 |
| B4 | 0.443 | 1.3 |
| B5 | 0.425 | 1.2 |
| B6 | 0.050 | 1.8 |
| B7 | 0.106 | 2.6 |

Experimental example [preparation of the foam and the physical properties of the foam]

All the aforementioned polyurethane resins (the polyurethane resins E1-E15 and B1-B7) are prepared into foams FE1-FE15 and FB1-FB7 respectively. The foams FE1-FE15 and FB1-FB7 are prepared by the impregnation foaming method or the supercritical fluid injection foaming method. Impregnation foaming method: 100g of the polyurethane resin was pressed into a 2 mm thin sheet and cut into a type C dumbbell-shaped test piece. The test piece was placed in a tank, the temperature was set 80 °C-130 °C, nitrogen gas was injected to a pressure of 50 Kg/cm²-150 Kg/cm². The impregnation time was 1800 seconds to 6000 seconds, then the pressure was released and the foam was taken out of the tank. Supercritical fluid injection foaming method: a 200 mm * 200 mm * 20 mm foam was made using Nexcell 310-E2 supercritical fluid continuous injection foaming device. Please refer to table 5 and table 6 for the foam preparation methods and conditions thereof used in the foams FE1-FE15 and FB1-FB7. Table 5 shows the conditions for preparing the foams by the impregnation foaming method. Table 6 shows the conditions for preparing the foams by the supercritical fluid injection foaming method.

**Table 5: impregnation foaming**

| Polyurethane resins/foams | Temperature (°C) | Pressure (Kg/cm²) | Impregnation time (seconds) |
|---|---|---|---|
| E1/FE1 | 80 | 150 | 3600 |
| E2/FE2 | 120 | 70 | 3600 |
| E3/FE3 | 90 | 120 | 3600 |
| E4/FE4 | 100 | 120 | 3600 |
| E5/FE5 | 130 | 50 | 3600 |
| E6/FE6 | 100 | 100 | 3600 |
| B1/FB1 | 80 | 150 | 3600 |
| B5/FB5 | 100 | 100 | 6000 |

**Table 6: supercritical fluid injection foaming**

| Polyurethane resins/foams | The feed amount of the polyurethane resin (g) | Screw temperature (°C) | Nitrogen gas amount (%) | Injection speed (mm/s) | Mold temperature (°C) |
|---|---|---|---|---|---|
| E7/FE7 | 144 | 155 | 39 | 60 | 20 |
| E8/FE8 | 144 | 155 | 39 | 60 | 20 |
| E9/FE9 | 144 | 160 | 40 | 50 | 25 |
| E10/FE10 | 269 | 160 | 42 | 50 | 25 |
| E11/FE11 | 173 | 165 | 42 | 60 | 20 |
| E12/FE12 | 144 | 160 | 40 | 50 | 25 |
| E13/FE13 | 188 | 165 | 42 | 60 | 20 |
| E14/FE14 | 158 | 160 | 40 | 60 | 20 |
| E15/FE15 | 113 | 160 | 40 | 60 | 25 |
| B2/FB2 | 166 | 165 | 40 | 60 | 20 |
| B3/FB3 | 173 | 165 | 40 | 60 | 20 |
| B4/FB4 | 173 | 165 | 42 | 60 | 20 |
| B6/FB6 | 144 | 155 | 39 | 60 | 20 |
| B7/FB7 | 144 | 155 | 39 | 60 | 20 |

Table 7 shows the foam outward appearance, the density, the tensile strength and the elongation at break of the foams FE1-FE15 and FB1-FB7. The test standard of the density is ASTMD297. The test standards of the tensile strength and the elongation at break are both ASTMD412. Specifically, the foams are cut into type C dumbbell-shaped test pieces and measured by using a universal testing machine (model 5566) from Instron Ltd. at a clamping distance of 64.2 mm and a tensile speed of 500±50 mm/min.

**Table 7**

| Foam | Foam outward appearance | Density (g/cm³) | Tensile strength (kgf/cm²) | Elongation at break (%) |
|---|---|---|---|---|
| FE1 | Very good | 0.15 | 26.0 | 168 |
| FE2 | Very good | 0.34 | 21.2 | 156 |
| FE3 | Very good | 0.20 | 30.3 | 130 |
| FE4 | Very good | 0.31 | 21.2 | 140 |
| FE5 | Very good | 0.26 | 21.7 | 191 |
| FE6 | Very good | 0.16 | 23.9 | 181 |
| FE7 | good, moderate flatness | 0.18 | 20.2 | 193 |
| FE8 | good, good flatness | 0.18 | 21.3 | 224 |
| FE9 | Very good | 0.18 | 21.5 | 237 |
| FE10 | Very good | 0.35 | 29.2 | 128 |
| FE11 | Very good | 0.22 | 25.1 | 132 |
| FE12 | Very good | 0.18 | 20.8 | 280 |
| FE13 | Very good | 0.24 | 24.7 | 223 |
| FE14 | Very good | 0.20 | 23.1 | 146 |
| FE15 | Very good | 0.14 | 20.1 | 176 |
| FB1 | Poor, pores on the surface skin layer | n.d. | n.d. | n.d. |
| FB2 | good, good flatness | 0.21 | 6.1 | 158 |
| FB3 | good, good flatness | 0.22 | 5.3 | 132 |
| FB4 | good, good flatness | 0.22 | 5.3 | 143 |
| FB5 | Poor, merely foamed on the surface skin layer | n.d. | n.d. | n.d. |
| FB6 | Poor, pores on the surface skin layer | n.d. | n.d. | n.d. |
| FB7 | Poor, pores on the surface skin layer | n.d. | n.d. | n.d. |

| | | | | |
|---|---|---|---|---|
| n.d.: not detected | | | | |

As shown in Table 7, the foams FE1-FE15 (corresponding to the polyurethane resins E1-E15 of the present case) have good foam outward appearances, and the foams with the density of 0.14 g/cm³-0.35 g/cm³, the tensile strength greater than 20 kgf/cm², and the elongation at break greater than 100% can be obtained. In contrast, the foams FB1 and FB5-FB7 (corresponding to the comparative examples B1 and B5-B7 of the present case) have the undesirable outward appearance, such as pores on the surface skin layer or merely foamed on surface skin layer; the foams FB2-FB4 (corresponding to the polyurethane resins B2-B4 of the present case) have good foam outward appearances, but the foams with the density of 0.14 g/cm³-0.35 g/cm³, the tensile strength greater than 20 kgf/cm², and the elongation at break greater than 100 % cannot be obtained.

The polyurethane resins E1-E15 have the amine value not less than 10 meq/kg and the content of the urea group unit greater than 0 and less than or equal to 0.4. Since the polyurethane resins containing the content of the urea group unit within this range have moderate hydrogen bonding forces, cells can be stabilized during foaming process to obtain the foams FE1-FE15 with the density of 0.14 g/cm³ to 0.35 g/cm³, the tensile strength greater than 20 kgf/cm², and the elongation at break greater than 100 %. The polyurethane resins B1 to B7 partially have the amine value less than 10 meq/kg, and the polyurethane resins B1 to B7 have insufficient or excessive urea group unit content. Insufficient urea group unit content results in insufficient intermolecular hydrogen bonding forces in the polyurethane resin, resulting in a decrease in the strength of the polyurethane resin material, and the foam is prone to surface pores/voids. Excessive urea group unit content leads to excessive intermolecular hydrogen bonding force of the polyurethane resin, which makes it impossible for gas to penetrate into the polyurethane resin material during foaming, and merely the surface skin layer of the foam is foamed, resulting in poor foam outward appearance. In addition, insufficient or excessive urea group unit content also cannot obtain the foam with the density of 0.14 g/cm³-0.35 g/cm³, the tensile strength greater than 20 kgf/cm², and the elongation at break greater than 100 % simultaneously.

The condensation type polyurethane resin of the present disclosure does not need to be prepared by using isocyanate, so the obtained polyurethane resin is quite environmentally friendly. In addition, the polyurethane resin of the present disclosure has the carbamate segments, the urea group-containing unit segments, and a terminal group, in which the polyurethane resin contains an appropriate content of the urea group units (greater than 0 and less than or equal to 0.4), and the amine value is not less than 10 meq/kg (conventionally, the polyurethanes made from isocyanate has a very low amine value of only 5 meq/kg). Therefore, using the polyurethane resin of the present disclosure can obtain the foam having the density of 0.14 g/cm³ to 0.35 g/cm³, the tensile strength greater than 20 kgf/cm², and the elongation at break greater than 100 %.

## Claims

1. A foam, **characterized by** comprising:
a condensation type polyurethane resin, comprising:
a plurality of carbamate segments;
a plurality of urea group-containing unit segments; and
a terminal group bonded to one of the carbamate segments or one of the urea group-containing unit segments, the terminal group having a terminal amine group, wherein a number of hydrogen atoms bonded to nitrogen in a plurality of 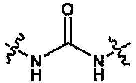 of the urea group-containing unit segments is defined as A₁, a number of hydrogen atoms bonded to nitrogen in 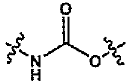 of the carbamate segments and the urea group-containing unit segments is defined as A₂, and A₁/(A₁+A₂) is greater than 0 and less than or equal to 0.4.

2. The foam of claim 1, **characterized in that** A₁/(A₁+A₂) is 0.1-0.3.

3. The foam of according to any one of claims 1-2, **characterized in that** A₁/(A₁+A₂) is 0.2-0.3.

4. The foam of according to any one of claims 1-3, **characterized in that** a density of the foam is 0.14 g/cm³ to 0.35 g/cm³.

5. The foam of according to any one of claims 1-4, **characterized in that** the condensation type polyurethane resin has an amine value not less than 10 meq/kg.

6. The foam of according to any one of claims 1-5, **characterized in that** the carbamate segments have a structure as shown in formula (1): 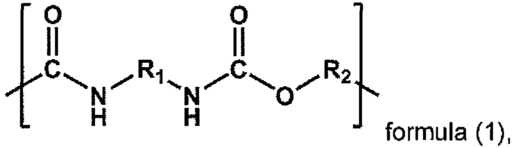
the urea group-containing unit segments have a structure as shown in formula (2): 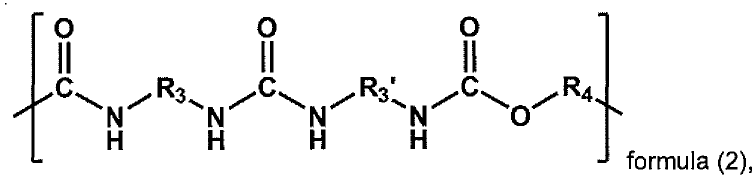
the terminal group bonded to R₂ of one of the carbamate segments or bonded to R₄ of one of the urea group-containing unit segments has a structure as shown in formula (3): 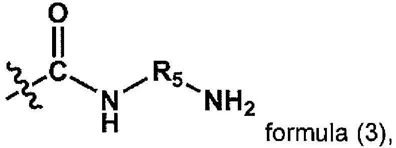 wherein R₁, R₃, R₃', and R₅ independently comprises a first organyl group of C2-C20, the first organyl group comprises a hydrocarbon group or a group having carbon, hydrogen, and oxygen, the carbamate segments have the same or different R₂, the urea group-containing unit segments have the same or different R₄, R₂ and R₄ independently comprise a second organyl group of C2-C20, the second organyl group comprises a hydrocarbon group or a group having carbon, hydrogen, and oxygen.

7. The foam of claim 6, **characterized in that** R₁, R₃, R₃', and R₅ independently comprise a C2-C20 aliphatic group, a C3-C20 alicyclic group, or a C6-C20 aryl group.

8. The foam of according to any one of claims 6-7, **characterized in that** R₂ and R₄ independently comprise 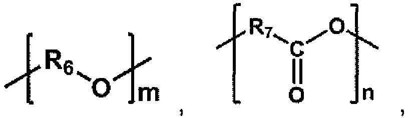 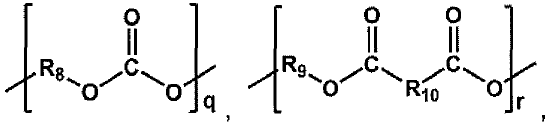 or combinations thereof, R₆, R₇, R₈, R₉, and R₁₀ independently comprise a third organyl group of C2-C20, the third organyl group comprises a hydrocarbon group or a group having carbon, hydrogen, and oxygen, and m, n, q, and r are independently 1-250.

9. The foam of claim 8, **characterized in that** R₆, R₇, R₈, R₉, and R₁₀ independently comprise a C2-C20 aliphatic group, a C3-C20 alicyclic group, or a C6-C20 aryl group.

10. The foam of according to any one of claims 1-9, **characterized in that** tensile strength of the foam is greater than 20 kgf/cm².

11. The foam of according to any one of claims 1-10, **characterized in that** elongation at break of the foam is greater than 100 %.
